(19) Europäisches Patentamt
European Patent Office
Office européen des brevets

(11) **EP 3 772 143 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **20000267.3**

(22) Anmeldetag: **29.07.2020**

(51) Internationale Patentklassifikation (IPC):
*H01R 39/24* $^{(2006.01)}$   *B25J 19/00* $^{(2006.01)}$
*H01R 39/34* $^{(2006.01)}$   *H01R 39/64* $^{(2006.01)}$

(52) Gemeinsame Patentklassifikation (CPC):
**H01R 39/24; B25J 19/0041; H01R 39/34;**
H01R 39/64

(54) **DREHÜBERTRAGER**

ROTARY JOINT

TRANSMETTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2019 DE 102019005318**

(43) Veröffentlichungstag der Anmeldung:
**03.02.2021 Patentblatt 2021/05**

(73) Patentinhaber:
- **Zimmer, Günther**
  **77866 Rheinau (DE)**
- **Zimmer, Martin**
  **77866 Rheinau (DE)**

(72) Erfinder:
- **Zimmer, Günther**
  **77866 Rheinau (DE)**
- **Zimmer, Martin**
  **77866 Rheinau (DE)**

(74) Vertreter: **Thämer, Wolfgang**
**Zürn & Thämer**
**Patentanwälte**
**Hermann-Köhl-Weg 8**
**76571 Gaggenau (DE)**

(56) Entgegenhaltungen:
EP-A1- 3 154 134       DE-A1- 10 006 226
DE-A1-102011 006 322   DE-B4-102011 006 322
US-A- 2 248 394        US-A1- 2003 054 672

EP 3 772 143 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Drehübertrager für elektrische Signale, Daten und/oder elektrische Energie mit einem mindestens einen Schleifkontakt aufweisenden ersten Teilbereich und mit einem relativ zum ersten Teilbereich um eine Drehachse drehbar gelagerten, mindestens einen den Schleifkontakt kontaktierenden Kontaktring aufweisenden zweiten Teilbereich, wobei an jedem Kontaktring mindestens zwei Schleifkontakte anliegen sowie eine Baureihe aus mindestens zwei Drehübertragern unterschiedlicher Baugröße.

Aus der EP 2 138 281 A1 und der DE 10 2008 055 971 A1 sind derartige Drehübertrager bekannt. Wie die Kontaktstellen im Einzelnen aufgebaut sind, geht aus diesen Druckschriften nicht hervor.

Die US 2 248 394 A lehrt, an einer rotierbaren Achse eines Eisenbahnrades zwei radial orientierte Schleifkontakte anzulegen. Eine derartige Lösung wird in der EP 3 154 134 A1 für eine Hochfrequenzübertragung vorgeschlagen.

Gemäß der DE 10 2011 006 322 A1 und der DE 100 06 226 A1 sollen bei einem Drehübertrager mit zusätzlicher Medienübertragung axial orientierte elektrische Kontaktscheiben und Kontaktbürsten eingesetzt werden. Die erstgenannte Druckschrift schlägt zusätzlich den Einsatz von Ringplatinen vor.

Der vorliegenden Erfindung liegt die Problemstellung zugrunde, einen kompakten, problemlos zu montierenden Drehübertrager zu entwickeln.

Diese Problemstellung wird mit den Merkmalen des Hauptanspruches gelöst. Dazu weist der Drehübertrager zwei Platinen auf, denen jeweils einer dieser Schleifkontakte zugeordnet ist. Diese beiden, eine Platinengruppe bildenden Platinen schließen in einer Normalenebene zur Drehachse miteinander einen Platinenwinkel zwischen ($\pi/2$) und ($\pi$) ein. Außerdem ist diese Platinengruppe auf einem einzigen Platinenträger angeordnet. Der Drehübertrager weist mindestens zwei koaxial zur Drehachse angeordnete, an beiden Teilbereichen anliegende und mindestens einen umlaufenden Medienkanal begrenzende Runddichtringe auf. Die Kontaktringe liegen radial außerhalb des mindestens einen Medienkanals.

In der Baureihe mindestens zweier Drehübetrager unterscheiden sich diese im Durchmesser ihrer Kontaktringe. Beide Drehübertrager weisen mindestens eine identische Platinengruppe auf. Jede Platine dieser Platinengruppe definiert eine Länge einer Sehne zwischen dem Scheitel des Platinenwinkels und der Kontaktstelle des Schleifkontakts mit dem Kontaktring. Der von der Sehne und einer Radialebene zur Drehachse an der Kontaktstelle eingeschlossene Kontaktwinkel zweier Drehübertrager differiert um maximal +/- fünf Grad voneinander. Der von der Sehne und der Platinenauflagefläche eingeschlossene Zusatzwinkel beider Drehübertrager ist gleich. Der jeweilige Platinenwinkel ist die Summe des doppelten Zusatzwinkels und des Arcuscosinus des Produkts aus dem Kehrwert des Abstands zwischen der Scheitellinie und der Drehachse und aus der Differenz der Sehnenlänge und des mit dem Cosinus des Kontaktwinkels multiplizierten halben Kontaktringdurchmessers des jeweiligen Drehübertragers. Außerdem ist der Abstand zwischen der Scheitellinie und der Drehachse die positive Wurzel aus der Summe des Quadrats der Sehnenlänge, des Quadrats des jeweiligen halben Kontaktringdurchmessers und des negativen Produkts der Sehnenlänge, des jeweiligen Kontaktringdurchmessers und des Cosinus des Kontaktwinkels.

Der modular aufgebaute Drehübertrager ermöglicht es, elektrische Signale, Daten und/oder elektrische Energie von einer ersten Baugruppe an eine relativ zu dieser ersten Baugruppe drehbaren zweiten Baugruppe zu übertragen. Gegebenenfalls kann zusätzlich die Übertragung flüssiger und/oder gasförmiger Medien vorgesehen sein. Der Drehübertrager hat keine Anschläge, sodass vielfache Umdrehungen der beiden Baugruppen zueinander um die Drehachse möglich sind.

Die elektrische Übertragung zwischen den Teilbereichen erfolgt jeweils mittels eines Kontaktrings und zwei an diesem anliegenden Schleifkontakten. Damit sind die Kontaktstellen redundant ausgelegt, sodass beim Ausfall einer Kontaktstelle die andere weiterhin Signale, Daten und/oder Energie überträgt. Außerdem wird an den Kontaktstellen eine geringe Stromdichte erreicht.

Die Schleifkontakte sind Teil von zwei von einem Platinenträger getragenen Platinen. Jede Platine trägt beispielsweise vier oder sechs Schleifkontakte. Die beiden Platinen bilden eine Platinengruppe. Die beiden Platinen können miteinander verbunden sein. Der Platinenträger gibt einen Platinenwinkel vor, den die beiden Platinen miteinander einschließen. Damit sind die Platinen unabhängig von der Baugröße der Kontaktringe und des Drehübertragers einsetzbar. Beim Zusammenbau des Drehübertragers werden sie zusammen mit dem Platinenträger montiert, sodass ein Anpassen entfällt.

In der Baureihe werden für Drehübertrager mit Kontaktringen unterschiedlicher Durchmesser identische Platinengruppen eingesetzt. Aufgrund der Anpassung des Platinenwinkels und des Abstands des Scheitels des Platinenwinkels von der Drehachse werden bei weitgehender Beibehaltung des Kontaktwinkels für alle Baugrößen gleiche Kontaktverhältnisse erreicht. Für die gesamte Baureihe können damit die Platinengruppen als Gleichteile eingesetzt werden.

Weitere Einzelheiten der Erfindung ergeben sich aus den Unteransprüchen und der nachfolgenden Beschreibung schematisch dargestellter Ausführungsformen.

Figur 1: Drehübertrager;

Figur 2: Längsschnitt des Drehübertragers;

Figur 3: Querschnitt des Drehübertragers;

Figur 4: Isometrischer Längsschnitt der Eingangsglocke;

Figur 5: Kontaktbaugruppe;

Figur 6: Platinenträger;

Figur 7: Platinengruppe;

Figur 8: Querschnitt des Platinenträgers mit eingesetzter Platinengruppe;

Figur 9: Isometrische Schnittansicht des Trägerflanschs;

Figur 10: Schnittdarstellung der Ringträgergruppe;

Figur 11: Dimetrische Ausschnittsdarstellung des Drehübertragers;

Figur 12: Schematische Darstellung der Anordnung aus Figur 3;

Figur 13: Schematische Schnittdarstellung eines Drehübertragers mit gegenüber der Figur 12 kleinerem Durchmesser der Kontaktringe;

Figur 14: Schematische Schnittdarstellung eines Drehübertragers mit gegenüber der Figur 12 größerem Durchmesser der Kontaktringe.

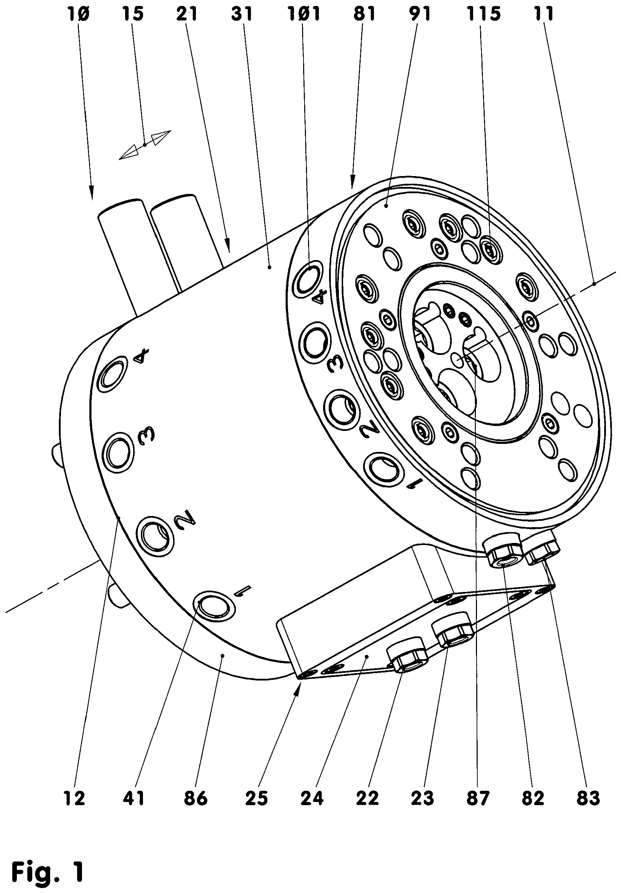

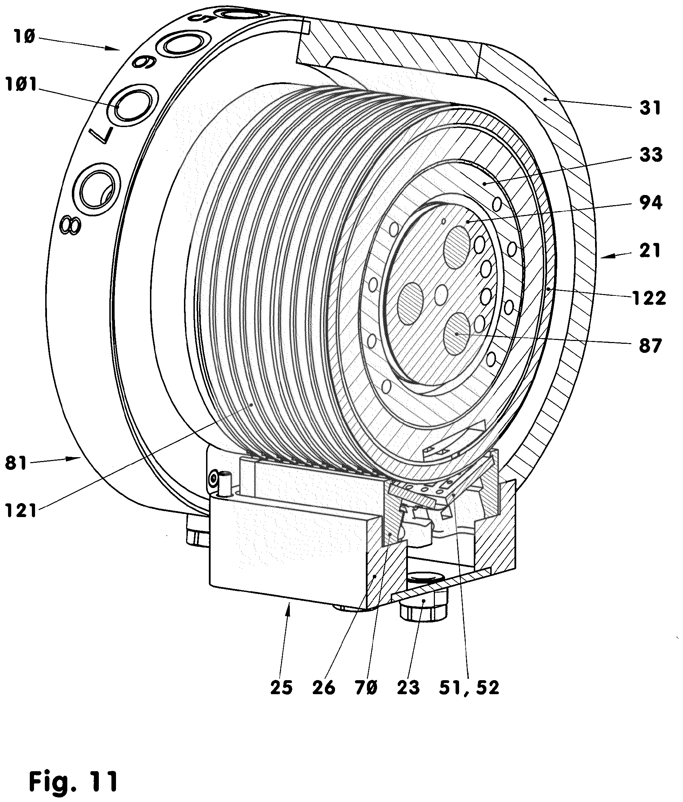

Die Figuren 1 - 12 zeigen einen Drehübertrager (10) in Ansichten und Schnitten sowie einige Einzelteile eines derartigen Drehübertragers (10). Derartige Drehübertrager (10) werden eingesetzt, um die Übertragung beispielsweise von Signalen, Daten und/oder Energie zwischen relativ zueinander rotierbaren oder schwenkbaren Baugruppen zu ermöglichen. Einsatzgebiete derartiger Drehübertrager (10) sind beispielsweise Industrieroboter, z.B. Handhabungsroboter oder Werkzeugmaschinen. Der in den genannten Figuren dargestellte Drehübertrager (10) hat beispielsweise eine Länge von 120 Millimetern und einen Durchmesser von 125 Millimetern. Er ist für Drehzahlen beispielsweise bis 120 Umdrehungen pro Minute ausgelegt.

Der Drehübertrager (10) hat zwei relativ zueinander rotierbare Teilbereiche (21, 81). Einer dieser Teilbereiche (21), ein erster Teilbereich (21), ist im Folgenden auch als Eingangsgruppe (21) bezeichnet. Diese Eingangsgruppe (21) ist beispielsweise ortsfest am Gestell eines Handhabungsroboters angeordnet. Der zweite Teilbereich (81), im Folgenden auch als Ausgangsgruppe (81) bezeichnet, ist z.B. an einem relativ zum Gestell drehbaren Arm des Handhabungsroboters befestigt. Es ist auch denkbar, den zweiten Teilbereich (81) ortsfest am Gestell und den ersten Teilbereich (21) an dem relativ zum Gestell beweglichen Arm des Industrieroboters anzuordnen. Beide Teilbereiche (21, 81) sind koaxial zu einer in einer Längsrichtung (15) des Drehübertragers (10) orientierten Drehachse (11) angeordnet.

Der Drehübertrager (10) hat im Ausführungsbeispiel zwei elektrische Eingangsanschlüsse (22, 23) und zwei elektrische Ausgangsanschlüsse (82, 83). Sowohl die Eingangsanschlüsse (22, 23) als auch die Ausgangsanschlüsse (82, 83) sind jeweils für die Aufnahme mehradriger Kabel ausgelegt. Die Eingangsanschlüsse (22, 23) sitzen hierbei im Deckel (24) einer Kontaktbaugruppe (25), die an einer Eingangsglocke (31) der Eingangsgruppe (21) befestigt ist. Die Ausgangsanschlüsse (82, 83) durchdringen die Umfangsfläche (93) eines Tragflansches (92) der Ausgangsgruppe (81).

Der in den Figuren dargestellte Drehübertrager (10) hat weiterhin an beiden Teilbereichen (21, 81) jeweils acht Medienanschlüsse (41, 101). Dies sind beispielsweise Pneumatikanschlüsse (41, 101). Die jeweiligen Eingangsmedienanschlüsse (41) sind an der Eingangsgruppe (21) und die jeweiligen Ausgangsmedienanschlüsse (101) sind an der Ausgangsgruppe (81) angeordnet. Anstatt für Pneumatik können die Medienanschlüsse (41, 101) auch für Hydraulik, Wasser, für andere Flüssigkeiten oder für gasförmige Medien eingesetzt werden. Auch ist es denkbar, einzelne Medienanschlüsse (41, 101) für unterschiedliche Medien zu verwenden.

Die Eingangsgruppe (21) ist im Ausführungsbeispiel mittels zweier Wälzlager (16, 17) auf der Ausgangsgruppe (81) gelagert. Beide Wälzlager (16, 17) sind z.B. als einreihige Rillenkugellager in O-Anordnung gelagert. Die Wälzlager (16, 17) können auch als Schrägkugellager, Zylinderrollenlager, Nadellager, etc. ausgebildet sein. Auch ist es denkbar, anstatt der Wälzlager (16, 17) Gleitlager einzusetzen.

In den Bewegungsfugen (12) zwischen dem ersten Teilbereich (21) und dem zweiten Teilbereich (81) sind Wellendichtringe (13) angeordnet. Der zweite Teilbereich (81) trägt außerdem eine Vielzahl von Runddichtringen (18), die in radialer Richtung am ersten Teilbereich (21) abdichtend anliegen. Diese Runddichtringe (18) trennen vom ersten Teilbereich (21) in den zweiten Teilbereich (81) verlaufende Medienkanäle (42, 104) hermetisch voneinander ab. Es ist auch denkbar, den Drehübertrager (10) ohne die Medienkanäle (42, 104) auszubilden.

Der zweite Teilbereich (81) trägt weiterhin eine Vielzahl von Kontaktringen (121). Diese Kontaktringe (121) sind koaxial zur Drehachse (11) angeordnet. Im Ausführungsbeispiel haben alle Kontaktringe (121) identische Abmessungen. Zwischen den einzelnen Kontaktringen (121) sind Isolierringe (122) angeordnet. Der Drehübertrager (10) kann auch mit nur einem Kontaktring (121) ausgebildet sein.

An jedem Kontaktring (121) liegen mindestens zwei Schleifkontakte (61, 62) an. Diese Schleifkontakte (61, 62) sind Teil der Kontaktbaugruppe (25) des ersten Teilbereichs (21). An der Kontaktbaugruppe (25) sind beispielsweise elektrische Kabel befestigt, die durch die elektrischen Anschlusshülsen (22, 23) hindurch aus dem Deckel (24) und aus dem Drehübertrager (10) hinausgeführt sind.

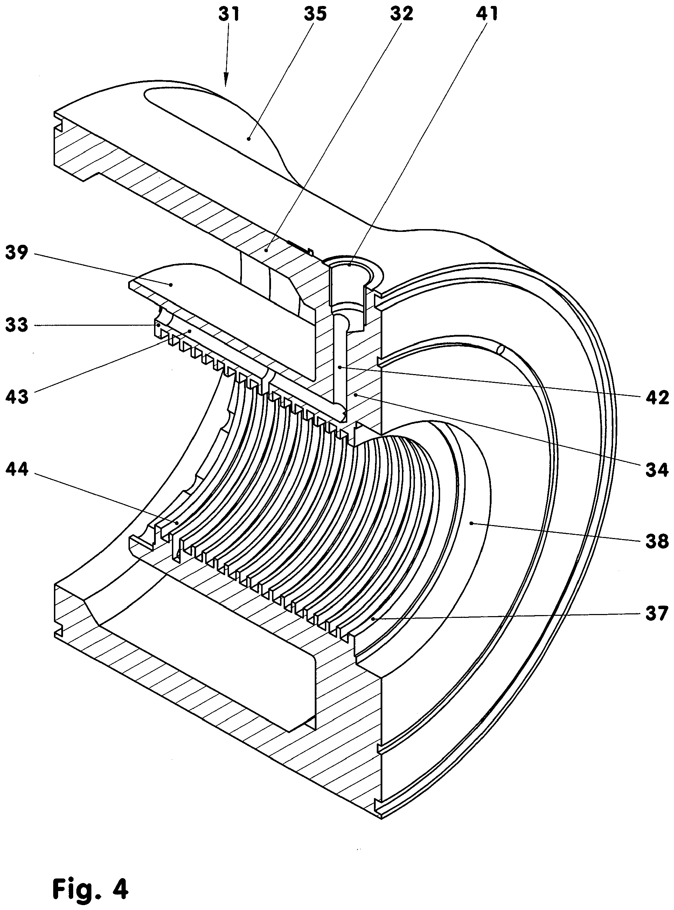

In der Figur 4 ist die Eingangsglocke (31) dargestellt. Sie hat einen Außenmantel (32) und eine Nabe (33). Der Außenmantel (32) und die Nabe (33) sind einseitig mittels einer Stirnscheibe (34) miteinander verbunden. Im Außenmantel (32) ist eine Ausnehmung (35) eingebracht, in der bei montiertem Drehübertrager (10) die Kontaktbaugruppe (25) sitzt. Die Kontaktbaugruppe (25) liegt hierbei auf einem Auflagerand (36) auf und ist mit diesem z.B. verschraubt.

Im Bereich der Stirnscheibe (34) sind die Medienanschlüsse (41) eingebracht. Je ein Medienanschluss (41) ist über einen Eingangsglockenkanal (43) mit einem umlaufenden Kanal (44) an der Innenseite (37) der Nabe (33) verbunden. Die einzelnen Eingangsglockenkanäle (43) sind versetzt zueinander angeordnet, sodass sie sich nicht schneiden. Ebenfalls an der Innenseite (37) hat die Nabe (33) zwei Lagersitze (38) zur Aufnahme der Außenringe der Wälzlager (16, 17). Die Mantelfläche (39) der Nabe (33) ist zylindrisch ausgebildet.

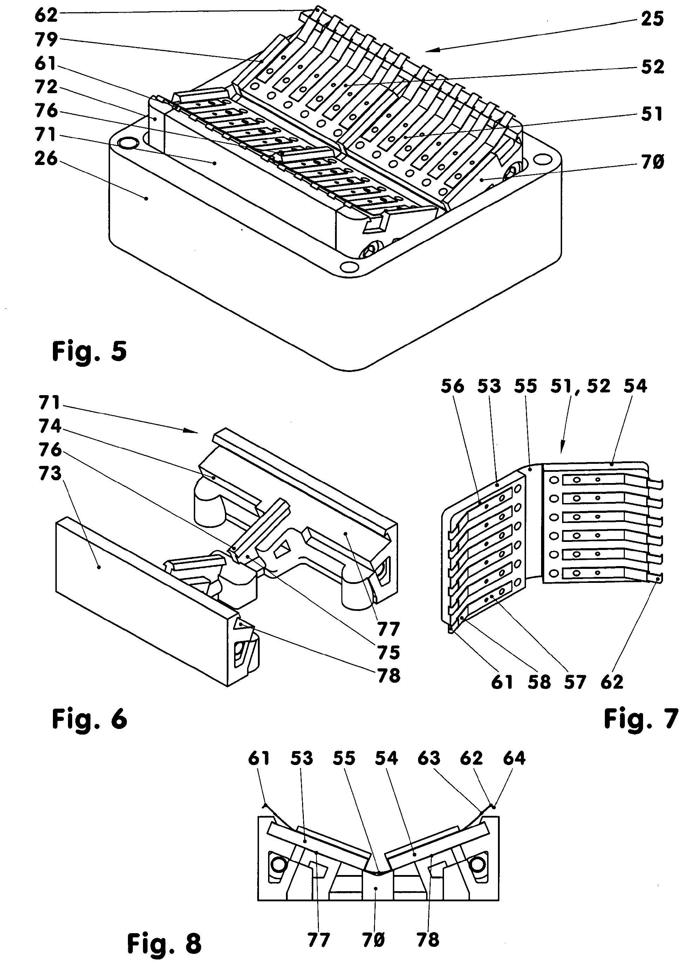

Die Figur 5 zeigt die Kontaktbaugruppe (25). Die Kontaktbaugruppe (25) umfasst einen Trägerrahmen (26), einen Platinenträger (70) und eine Platinengruppe (51). Der Trägerrahmen (26) hat im Ausführungsbeispiel eine zumindest annähernd rechteckige Grundfläche. An seinen Ecken hat er Durchgangsbohrungen zum Befestigen der Kontaktbaugruppe (25) an der Eingangsglocke (31).

Im Trägerrahmen (26) sitzt der Platinenträger (70). Der Platinenträger (70) ist beispielsweise dreiteilig aufgebaut. Er hat ein in der Draufsicht Doppel-T-förmiges Mittelstück (71) und zwei Endstücke (72). Seine Außenabmessungen entsprechen weitgehend den Innenabmessungen des Trägerrahmens (26). Beispielsweise ist der Platinenträger (70) an seinen Ecken von unten her mit dem Trägerrahmen (26) verschraubt. Der Platinenträger (70) ist symmetrisch in Bezug auf eine vertikale Mittenlängsebene aufgebaut. Bei eingebauter Kontaktbaugruppe (25) liegt die Drehachse (11) des Drehübertragers (10) in dieser vertikalen Mittenlängsebene. Diese Ebene ist damit eine Radialebene.

Das in der Figur 6 dargestellte Mittelstück (71) hat zwei zueinander parallele Randstege (73, 74), die mittels eines Querstegs (75) miteinander verbunden sind. Hierbei ist der Quersteg (75) V-förmig aufgebaut. Er steigt zu beiden Randstegen (73, 74) hin an. Der Quersteg (75) trägt zwei pilzförmig ausgebildete Übergriffsleisten (76), die jeweils bereichsweise oberhalb von zwei Auflageflächen (77, 78) liegen. Die jeweilige Auflagefläche (77, 78) ist eine ebene Fläche, die sowohl Bereiche des Querstegs (75), der Randstege (73, 74) und der Endstücke (72) umfasst. Im Ausführungsbeispiel schließen die beiden symmetrisch zur vertikalen Mittenlängsebene einander gegenüberliegenden Auflageflächen (77, 78) einen Winkel von 137 Grad ein. Dieser Winkel ist im Folgenden als Platinenwinkel ($\beta$) bezeichnet. Der Platinenwinkel ($\beta$) kann zwischen $\pi/2$ und $\pi$ betragen. Im eingebauten Zustand ist der Platinenwinkel ($\beta$) symmetrisch zu einer die Drehachse (11) enthaltenden Radialebene angeordnet. Die beiden beispielsweise zueinander identischen Endstücke (72) haben Halteleisten (79), die oberhalb der Auflageflächen (77, 78) auskragen.

Auf den Auflageflächen (77, 78) liegen beispielsweise zwei Platinengruppen (51, 52), vgl. die Figuren 5 und 8. Es ist auch denkbar, die Kontaktbaugruppe (25) mit einer einzelnen Platinengruppe (51; 52) auszubilden. Jede Platinengruppe (51; 52) besteht im Ausführungsbeispiel aus zwei miteinander verbundenen Platinen (53, 54). Das Verbindungsband (55) zwischen den einander gegenüberliegenden Platinen (53, 54) ist elastisch biegbar ausgebildet. Hierbei liegt die Biegelinie des Verbindungsbands (55) in der genannten vertikalen Mittenlängsebene. Die einzelne Platinengruppe (51; 52) kann auch ohne das Verbindungsband (55) ausgebildet sein. Sie umfasst dann zwei einzelne, nicht miteinander verbundene Platinen (53, 54).

Die Figur 7 zeigt eine Platinengruppe (51; 52) des Ausführungsbeispiels. Die beiden Platinen (53, 54) sind spiegelsymmetrisch zueinander aufgebaut. Sie bestehen z.B. aus einem mehrschichtigem Verbundwerkstoff. Jede Platine (53, 54) umfasst zumindest eine elektrisch nicht leitfähige Trägerschicht (56). Diese Trägerschicht (56) trägt elektrisch leitende Leiterbahnen (57). Diese Leiterbahnen (57) sind z.B. aus einer flächigen Kontaktschicht mittels eines Ätzverfahrens vereinzelt, als Kontaktbleche auf die Trägerschicht (56) aufgebracht, etc. Das Verbindungsband (55) ist aus einem der Platinenwerkstoffe, z.B. dem elektrisch nichtleitenden Trägerwerkstoff, hergestellt. Er ist an beide Platinen (53, 54) angeformt. Es ist auch denkbar, das Verbindungsband (55) zusätzlich mit elektrischen Leiterbahnen auszubilden. Diese Leiterbahnen verbinden dann zwei Schleifkontakte (61, 62), die an dem gleichen Kontaktring (121) anliegen.

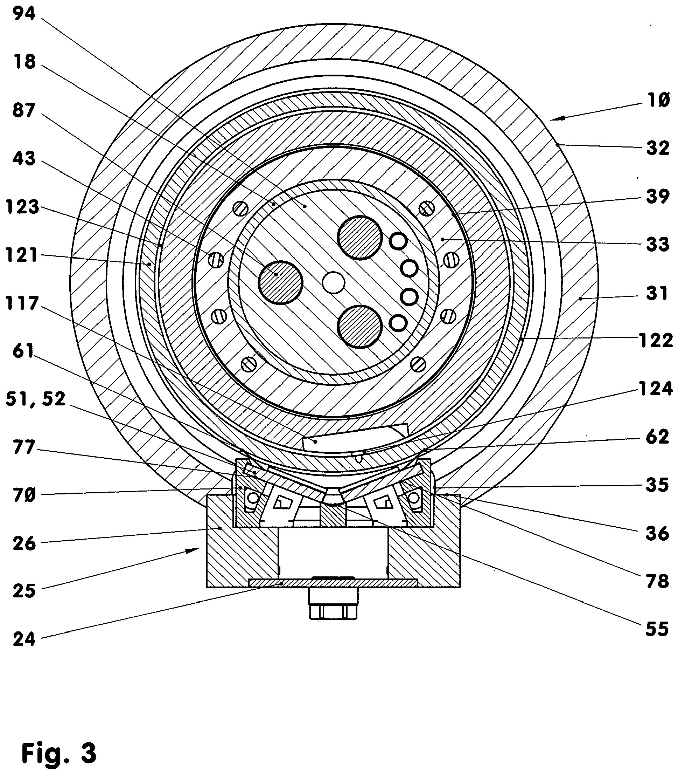

Die elektrischen Leiterbahnen (57) liegen parallel zueinander und sind normal zur Längsrichtung (15) angeordnet. Im Ausführungsbeispiel hat jede Platine (53, 54) sechs in den Darstellungen der Figuren 3, 5, 7 und 8 nach oben abgewinkelte Kontaktbleche (58). Diese stehen nach außen hin über den Platinenträger (70) über. An jedem Kontaktblech (58) ist am freien Ende ein Schleifkontakt (61; 62) angeordnet. Dies ist beispielsweise ein L-förmig gebogenes leitfähiges Blech, dessen langer Schenkel (63) am freien Ende des Kontaktblechs (58) z.B. angelötet ist. Der kurze Schenkel (64) ist in den genannten Darstellungen nach unten gebogen. Der Biegewinkel beträgt beispielsweise 90 Grad. Der Schleifkontakt (61, 62) kann auch aus einzelnen, parallel zueinander angeordneten gebogenen Stiften hergestellt sein. Sowohl das Kontaktblech (58) als auch der Schleifkontakt (61, 62) sind beispielsweise aus einem elektrisch leitenden Federstahl hergestellt.

In der montierten Kontaktbaugruppe (25), vgl. die Figuren 5 und 8, liegt jede Platine (53, 54) auf einer Auflagefläche (77; 78) auf. Die beiden Platinen (53, 54) der Platinengruppe (51; 52) schließen dabei den Platinenwinkel ($\beta$) ein. Die Platinengruppe (51; 52) ist am Platinenträger (70) befestigt. Ihre Lage wird mittels der Übergriffsleisten (76) und Halteleisten (79) gesichert.

Die Ausgangsgruppe (81), vgl. die Figuren 1 - 3 und 9 - 11, umfasst einen Flanschzapfen (91), einen Abschlussflansch (86) und eine Ringträgergruppe (111). Der Abschlussflansch (86) ist an einem freien Ende des Flanschzapfens (91) mittels Befestigungsschrauben (87) befestigt. Zur Lagezentrierung dienen Zentrierzapfen (88). Der Flanschzapfen (91) trägt die Innenringe der Wälzlager (16, 17), die die Eingangsgruppe (21) tragen. Am Flanschzapfen (91) ist ebenfalls die Ringträgergruppe (111) befestigt. Im montierten Zustand ragt die Ringträgergruppe (111) in die Eingangsglocke (31).

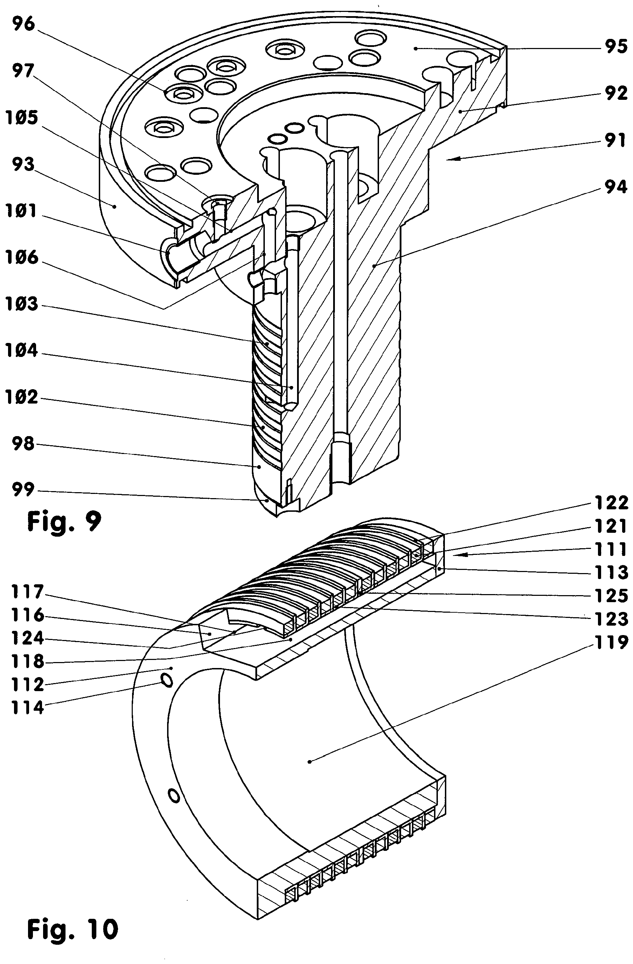

Die Figur 9 zeigt den Flanschzapfen (91) in einem Längsschnitt. Der Flanschzapfen (91) hat einen zentral im Drehübertrager (10) angeordneten Trägerzapfen (94), der an einem Tragflansch (92) angeordnet ist. Der Tragflansch (92) hat an seiner Stirnfläche (95) Montagebohrungen (96) und Hilfsbohrungen (97). An der Umfangsfläche (93) des Tragflansches (92) sind die Medienanschlüsse (101) und die elektrischen Anschlüsse (82, 83) angeordnet.

Der Trägerzapfen (94) hat eine zylindrische Hüllkontur. An seinem beiden in der Längsrichtung (15) orientierten Enden hat seine Mantelfläche (98) Lagersitzflächen (99) zur Aufnahme der Wälzlager (16, 17). Zwischen den beiden Lagersitzflächen (99) sind Dichtungssitzflächen (102) und umlaufende Rinnen (103) angeordnet. Hierbei liegt zwischen zwei Dichtungssitzflächen (102) jeweils eine Rinne (103). Alle Rinnen (103) haben beispielsweise den gleichen Querschnitt. Jede Rinne (103) ist mit jeweils einem Medienanschluss (101) über einen Medienkanal (104) verbunden. Im Ausführungsbeispiel umfasst jeder Medienkanal (104) drei Radialkanalabschnitte (105) und zwei Längskanalabschnitte (106).

In der Figur 10 ist die Ringträgergruppe (111) in einem Längsschnitt dargestellt. Sie umfasst eine Traghülse (112) mit einem Endring (113), die Kontaktringe (121) und die Isolierringe (122). Die beispielsweise aus einem nichtleitenden Kunststoff hergestellte Traghülse (112) hat stirnseitige Gewindebohrungen (114). Bei montiertem Drehübertrager (10) sind in diesen Gewindebohrungen (114) den Tragflansch (92) durchdringende Tragschrauben (115) befestigt. Die Traghülse (112) weist einen endseitigen Bund (116) auf. Dieser Bund (116) wird von einem Kabelkanal (117) durchdrungen, der sich in einer Abflachung (118) der ansonsten zylindrischen Mantelfläche der Traghülse (112) fortsetzt. Die Traghülse (112) hat eine zylindrische Innenmantelfläche (119). Bei zusammengebautem Drehübertrager (10) ist diese Innenmantelfläche (119) koaxial zur Drehachse (11).

Der Endring (113) ist an der Traghülse (112) zentriert und an dieser befestigt. Sein Innendurchmesser und sein Außendurchmesser entsprechen den Werten der Traghülse (112).

Zwischen dem Bund (116) und dem Endring (113) sind die Isolierringe (122) und die Kontaktringe (121) angeordnet. Hierbei untergreifen die Isolierringe (122) mit einem Isoliersteg (123) die Kontaktringe (121) und isolieren diese gegeneinander und gegen eventuelle Kriechströme. Bei einer Traghülse (112) aus einem metallischen Werkstoff können die Isolierringe (122) die Kontaktringe (121) zusätzlich gegen die Traghülse (112) isolieren. Im Ausführungsbeispiel berühren sich die einander benachbarten Isolierringe (122). Auf jedem Isoliersteg (123) eines Isolierrings (122) sitzt ein Kontaktring (121). Mittig über dem Kabelkanal (117) hat jede dieser Isolierstege (122) einen Anschlussdurchbruch (124). Die Kontaktringe (121) haben z.B. einen quadratischen Querschnitt. Sie haben einen kleineren Durchmesser als die Isolierringe (122). An jedem Kontaktring (121) ist beispielsweise ein Anschlussdraht angelötet, der durch den Anschlussdurchbruch (124) und den Kabelkanal (117) hindurch zu den elektrischen Anschlüssen (82, 83) geführt ist. Zwischen den beiden Gruppen mit jeweils sechs Kontaktringen (121) ist ein Abstandsring (125) angeordnet.

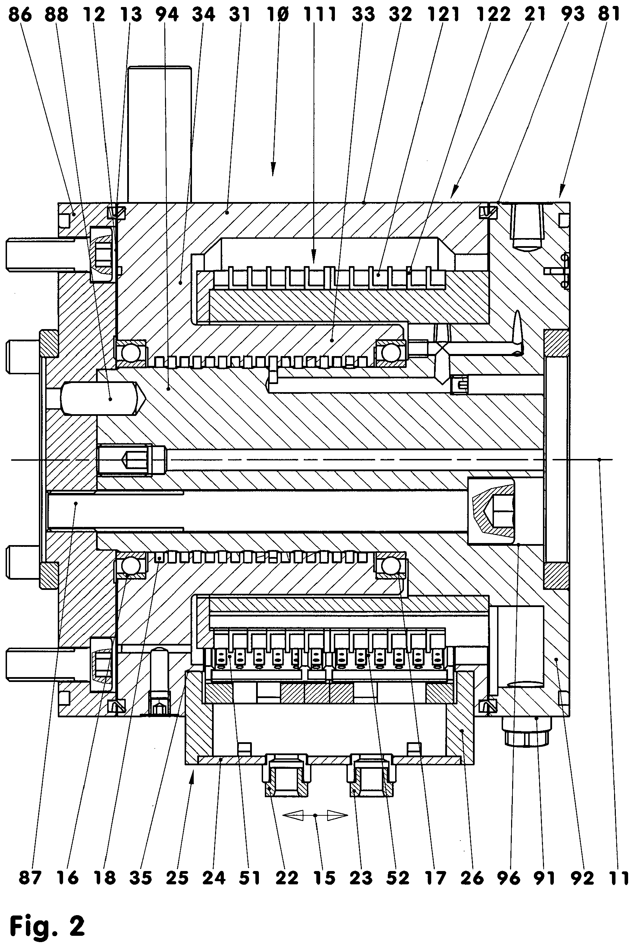

Beim Zusammenbau des Drehübertragers (10) wird beispielsweise zunächst die Ringträgergruppe (111) zusammengebaut. Hierzu wird z.B. auf das dem Bund (116) abgewandte Ende der Traghülse (112) abwechselnd ein mit einem Anschlussdraht versehener Kontaktring (121) und ein Isolierring (122) aufgeschoben. Nach beispielsweise sechs Kontaktringen (121) und Isolierringen (122) wird ein Abstandsring (125) aufgeschoben. Es ist auch denkbar, die Ringträgerbaugruppe (111) mit zwei Sätzen zu jeweils vier Kontaktringen (121) auszubilden. Sämtliche Anschlussdrähte werden durch den Kabelkanal (117) geführt. Nach dem Befestigen des Endrings (113) an der Traghülse (112) wird die Ringträgergruppe (111) am Tragflansch (92) des Flanschzapfens (91) befestigt. Die Anschlussdrähte können nun zu den elektrischen Anschlüssen (82, 83) geführt werden. Auf den Trägerzapfen (94) des Flanschzapfens (91) werden das in Figur 2 rechts dargestellte Wälzlager (17) und die Runddichtringe (18) aufgeschoben.

Nach dem Einsetzen des ersten Wellendichtrings (13) kann die Eingangsglocke (31) auf die Runddichtringe (18) und auf das rechte Wälzlager (17) aufgeschoben werden. Die Eingangsglocke (31) wird hierbei beispielsweise ohne die Kontaktbaugruppe (25) montiert. Anschließend werden das zweite Wälzlager (16) sowie der zweite Wellendichtring (13) eingesetzt.

In den Trägerzapfen (94) werden stirnseitig Zentrierstifte (88) eingesetzt. Anschließend wird der Abschlussflansch (86) aufgesetzt und mittels der Befestigungsschrauben (87) am Flanschzapfen (91) befestigt.

Die Kontaktbaugruppe (25) wird beispielsweise separat montiert. Hierzu wird z.B. eine erste Platinengruppe (51; 52) von der einen Seite und eine zweite Platinengruppe (52; 51) von der anderen Seite auf den Platinenträger (70) aufgeschoben. Anschließend werden die Endstücke (72) eingesetzt und befestigt. Die Lage der beiden Platinengruppen (51; 52) ist nun gesichert. Gegebenenfalls können die Platinengruppen (51, 52) zusätzlich mittels Befestigungsmitteln, mittels einer adhäsiven Verbindung, etc. im Platinenträger (70) gesichert werden. Ein Ausrichten der einzelnen Platinengruppe (51; 52) ist nicht erforderlich.

Der Platinenträger (70) wird nun im Trägerrahmen (26) fixiert. Der Trägerrahmen (26) wird mit dem Deckel (24) verschlossen. Hierbei werden die elektrischen Anschlussleitungen von den Platinen (53, 54) zu den elektrischen Anschlüssen (22, 23) geführt. Abschließend kann die Kontaktbaugruppe (25) in die Eingangsglocke (31) eingesetzt und an dieser befestigt werden. In der Drehdurchführung (10) liegen die Schleifkontakte (61, 62) gleichmäßig an den Kontaktringen (121) an. Beispielsweise belasten sie diese jeweils mit einer Kraft von 0,15 Newton.

Nach der Montage des Drehübertragers (10) z.B. an einem Handhabungsroboter und dem elektrischen und beispielsweise zusätzlichen pneumatischen Anschluss kann der Drehübertrager (10) eingesetzt werden. Die Eingangsgruppe (21) und die Ausgangsgruppe (81) sind zueinander um einen beliebigen Winkel um die Drehachse (11) verdrehbar.

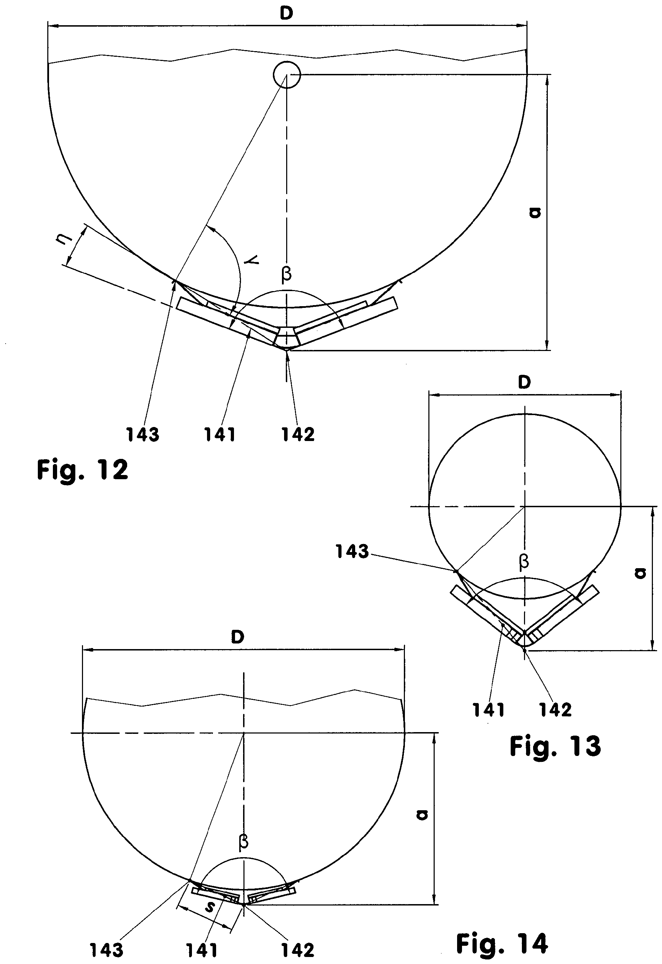

Die Figur 12 zeigt eine stark vereinfachte Querschnittdarstellung des Drehübertragers (10). Im Drehübertrager (10) hat der Platinenwinkel ($\beta$) eine in der Längsrichtung (15) orientierte gedachte Scheitellinie (142). Die Scheitellinie (142) und die Kontaktlinie (143) des einzelnen Schleifkontakts (61; 62) mit dem Kontaktring (121) sind mittels einer Sehne (141) verbunden. Diese Sehne (141) schließt mit der Auflagefläche (77; 78) einen Zusatzwinkel ($\eta$) ein. Der Winkel zwischen der Sehne (141) und einer Radialebene zur Drehachse (11) in der Kontaktlinie (143) wird im Folgenden als Kontaktwinkel ($\gamma$) bezeichnet. Für den Platinenwinkel ($\beta$) gilt damit:

$$\beta = 2 * \eta + \arccos\left((s - (D/2) * \cos\gamma) / a\right)$$

mit

D: Durchmesser des Kontaktrings (121) [mm] und
a: Abstand zwischen der Scheitellinie (142) und der Drehachse (11), wobei

$$a = (s^2 + (D^2/4) - s * D * \cos\gamma)^{1/2} \; ; \; a > 0$$

gilt.

Der Platinenwinkel ($\beta$) ist die Summe des doppelten Zusatzwinkels ($\eta$) und des Arcuscosinus des Produkts aus dem Kehrwert des Abstands (a) zwischen der Scheitellinie (142) und der Drehachse (11) und aus der Differenz der Sehnenlänge (s) und des mit dem Cosinus des Kontaktwinkels ($\gamma$) multiplizierten halben Kontaktringdurchmessers (D).

Der Abstand (a) zwischen der Scheitellinie (142) und der Drehachse (11) ist die positive Wurzel aus der Summe des Quadrats der Sehnenlänge (s), des Quadrats des halben Kontaktringdurchmessers (D) und des negativen Produkts der Sehnenlänge (s), des Kontaktringdurchmessers (D) und des Cosinus des Kontaktwinkels ($\gamma$).

Die beschriebene Platinengruppe (51; 52) kann in einer Baureihe von Drehübertragern (10) eingesetzt werden. Diese Baureihe umfasst Drehübertrager (10) die sich u.a. im Durchmesser der Kontaktringe (121) unterscheiden. Die Figur 13 zeigt einen stark vereinfachten Querschnitt eines Drehübertragers (10), dessen Kontaktring (121) z.B. den halben Durchmesser des in den Figuren 3 und 12 dargestellten Drehübertragers (10) hat. Der Kontaktring (121) des in einem vereinfachten Querschnitt in der Figur 14 dargestellten Drehübertragers (10) hat den doppelten Durchmesser des in den Figuren 3 und 12 dargestellten Kontaktrings (121). In allen diesen Drehübertragern (10) der Baureihe ist der Kontaktwinkel ($\gamma$) an der Kontaktstelle (143) zwischen den Schleifkontakten (61; 62) und dem Kontaktringen (121) gleich. Dieser Winkel zwischen der Sehne (141) und der Radialebene an der Kontaktstelle (143) beträgt in den dargestellten Ausführungsbeispielen der Baureihe 95 Grad. Der Kontaktwinkel ($\gamma$) kann innerhalb eines Toleranzfelds von +/- 5 Grad um den genannten Wert liegen.

Der Platinenträger (70) und seine Lage im Drehübertrager (10) wird für die verschiedenen Baugrößen in Abhängigkeit des Durchmessers (D) der Kontaktringe (121) nach den oben genannten Formeln bestimmt. Die Auflageflächen (77, 78) des baugrößenanhängigen Platinenträgers (70) schließen miteinander den ermittelten Platinenwinkel ($\beta$) ein. Die Lage des Platinenträgers (70) oder der gesamten Kontaktbaugruppe (25) relativ zur Drehachse (11) ergibt sich aus dem ermittelten Abstand (a).

Somit kann die gleiche Platinengruppe (51; 52) für eine Vielzahl von Drehübertragern (10) unterschiedlicher Baugröße eingesetzt werden. Hierbei bestehen an den Kontaktstellen (143) unabhängig von der Baugröße gleichartige Kontaktverhältnisse. Der minimale und der maximale Durchmesser der Kontaktringe (121) ist hierbei durch die genannten Grenzwinkel der Platinenwinkel ($\beta$) beschränkt. Es ist auch denkbar, in der Baureihe andere Parameter als Konstanten und als Variablen einzusetzen.

Sollte eine Wartung des Drehübertragers (10) erforderlich sein, kann die Kontaktbaugruppe (25) von der Eingangsglocke (31) abgenommen werden. Dies kann beispielsweise beim Verschleiß der Schleifkontakte (61, 62) erforderlich sein. Nach dem Herausnehmen des Platinenträgers (70) aus dem Trägerrahmen (26) kann nach dem Lösen eines Endstücks (72) die einzelne Platinengruppe (51; 52) herausgenommen werden. Nach dem Einstecken einer neuen Platinengruppe (51; 52) und der Befestigung des Endstücks (72) am Platinenträger (70) kann dieser wieder in den Trägerrahmen (26) eingesetzt werden. Die Kontaktbaugruppe (25) wird nun wieder an der Eingangsglocke (31) befestigt. Der Drehübertrager (10) ist jetzt wieder einsatzbereit. Der Drehübertrager (10) ist damit wartungsfreundlich aufgebaut. Für die gesamte Baureihe ist beispielsweise nur eine Bauform von Platinengruppen (51; 52) zu bevorraten.

Auch Kombinationen der einzelnen Ausführungsbeispiele sind denkbar.

Bezugszeichenliste:

| | |
|---|---|
| 10 | Drehübertrager, Drehdurchführung |
| 11 | Drehachse |
| 12 | Bewegungsfugen |
| 13 | Wellendichtringe, Spaltdichtung |
| 15 | Längsrichtung |
| 16 | Wälzlager |
| 17 | Wälzlager |
| 18 | Runddichtringe |
| 21 | Teilbereich, erster Teilbereich, Eingangsgruppe |
| 22 | Eingangsanschluss, Anschlusshülsen |
| 23 | Eingangsanschluss, Anschlusshülsen |
| 24 | Deckel |
| 25 | Kontaktbaugruppe |
| 26 | Trägerrahmen |
| 31 | Eingangsglocke |
| 32 | Außenmantel |
| 33 | Nabe |
| 34 | Stirnscheibe |
| 35 | Ausnehmung |
| 36 | Auflagerand |
| 37 | Innenseite von (33) |
| 38 | Lagersitze |
| 39 | Mantelfläche von (33) |
| 41 | Medienanschlüsse, Pneumatikanschlüsse, Eingangsmedienanschlüsse |
| 42 | Medienkanäle |
| 43 | Eingangsglockenkanal |
| 44 | Kanal, umlaufend |
| 51 | Platinengruppe |
| 52 | Platinengruppe |
| 53 | Platine |
| 54 | Platine |
| 55 | Verbindungsband |
| 56 | Trägerschicht |
| 57 | Leiterbahnen |
| 58 | Kontaktbleche |
| 61 | Schleifkontakt |
| 62 | Schleifkontakt |
| 63 | langer Schenkel von (61; 62) |
| 64 | kurzer Schenkel von (61; 62) |
| 70 | Platinenträger |
| 71 | Mittelstück |
| 72 | Endstücke |
| 73 | Randsteg |
| 74 | Randsteg |
| 75 | Quersteg |
| 76 | Übergriffsleisten |
| 77 | Auflageflächen, Platinenauflageflächen |
| 78 | Auflageflächen, Platinenauflageflächen |
| 79 | Halteleisten |

| 81 | Teilbereich, zweiter Teilbereich, Ausgangsgruppe |
| 82 | Ausgangsanschluss, elektrische Anschlüsse |
| 83 | Ausgangsanschluss, elektrische Anschlüsse |
| 86 | Abschlussflansch |
| 87 | Befestigungsschrauben |
| 88 | Zentrierzapfen; Zentrierstifte |
| 91 | Flanschzapfen |
| 92 | Tragflansch |
| 93 | Umfangsfläche |
| 94 | Trägerzapfen |
| 95 | Stirnfläche |
| 96 | Montagebohrungen |
| 97 | Hilfsbohrungen |
| 98 | Mantelfläche |
| 99 | Lagersitzflächen |
| 101 | Medienanschlüsse, Pneumatikanschlüsse, Ausgangsmedienanschlüsse |
| 102 | Dichtungssitzfläche |
| 103 | Rinnen |
| 104 | Medienkanal |
| 105 | Radialkanalabschnitte |
| 106 | Längskanalabschnitte |
| 111 | Ringträgergruppe |
| 112 | Traghülse |
| 113 | Endring |
| 114 | Gewindebohrungen |
| 115 | Tragschrauben |
| 116 | Bund |
| 117 | Kabelkanal |
| 118 | Abflachung |
| 119 | Innenmantelfläche |
| 121 | Kontaktringe |
| 122 | Isolierringe |
| 123 | Isoliersteg |
| 124 | Anschlussdurchbruch |
| 125 | Abstandsring |
| 141 | Sehne |
| 142 | Scheitel, Scheitellinie |
| 143 | Kontaktlinie, Kontaktstelle |
| a | Abstand Scheitellinie (142) zur Drehachse (11) |
| D | Durchmesser des Kontaktrings (121) |
| s | Länge der Sehne (141) |
| β | Platinenwinkel |
| γ | Kontaktwinkel |
| η | Zusatzwinkel |

**Patentansprüche**

1. Drehübertrager (10) für elektrische Signale, Daten und/oder elektrische Energie mit einem mindestens einen Schleifkontakt (61; 62) aufweisenden ersten Teilbereich (21; 81) und mit einem relativ zum ersten Teilbereich (21; 81) um eine Drehachse (11) drehbar gelagerten, mindestens einen den Schleifkontakt (61; 62) kontaktierenden Kontaktring (121) aufweisenden zweiten Teilbereich (81; 21), wobei an jedem Kontaktring (121) mindestens zwei Schleifkontakte (61, 62) anliegen, wobei der Drehübertrager (10) mindestens einen umlaufenden Medienkanal (44) aufweist und die Kontaktringe (121) radial außerhalb des mindestens einen Medienkanals (44) liegen, **dadurch gekennzeichnet**

- **dass** der Drehübertrager (10) zwei Platinen (53, 54) aufweist, denen jeweils einer dieser Schleifkontakte (61, 62) zugeordnet ist,
- **dass** diese beiden, eine Platinengruppe (51; 52) bildenden Platinen (53, 54) in einer Normalenebene zur Drehachse (11) miteinander einen Platinenwinkel (β) zwischen (π/2) und (n) einschließen,
- **dass** diese Platinengruppe (51; 52) auf einem einzigen Platinenträger (70) angeordnet ist,
- **dass** der Drehübertrager (10) mindestens zwei koaxial zur Drehachse (11) angeordnete, an beiden Teilbereichen (21, 81) anliegende und mindestens den umlaufenden Medienkanal (44) begrenzende Runddichtringe (18) aufweist.

2. Drehübertrager (10) nach Anspruch 1, **dadurch gekennzeichnet, dass** die beiden Platinen (53, 54) der Platinengruppe (51; 52) mittels eines flexiblen Verbindungsbandes (55) miteinander verbunden sind.

3. Drehübertrager (10) nach Anspruch 2, **dadurch gekennzeichnet, dass** das flexible Verbindungsband (55) zumindest bereichsweise aus einem nichtleitendem Trägerwerkstoff der Platinen (53, 54) besteht.

4. Drehübertrager (10) nach Anspruch 1, **dadurch gekennzeichnet, dass** jede Platine (53, 54) mindestens vier parallel zueinander angeordnete, jeweils einen Schleifkontakt (61; 62) aufweisenden Leiterbahnen (57) umfasst.

5. Drehübertrager (10) nach Anspruch 1, **dadurch gekennzeichnet, dass** die Winkelhalbierende des Platinenwinkels (β) die Drehachse (11) schneidet.

6. Drehübertrager (10) nach Anspruch 1, **dadurch gekennzeichnet, dass** die Kontaktringe (121) mit den Schleifkontakten (61; 62) jeweils in zwei Kontaktstellen (143) einen parallel zur Drehachse (11) orientierten Linienkontakt haben.

7. Drehübertrager (10) nach Anspruch 1, **dadurch gekennzeichnet, dass** die Kontaktringe (121) in Gruppen angeordnet sind, wobei die Anzahl der Kontaktringe (121) pro Gruppe der Hälfte der Anzahl der Schleifkontakte (61, 62) pro Platinengruppe (51; 52) beträgt.

8. Baureihe aus mindestens zwei Drehübertragern (10) unterschiedlicher Baugröße nach Anspruch 1, **dadurch gekennzeichnet,**

- **dass** diese Drehübertrager (10) sich im Durchmesser (D) ihrer Kontaktringe (121) unterscheiden,
- **dass** beide Drehübertrager (10) mindestens eine identische Platinengruppe (51; 52) aufweisen,
- **dass** jede Platine (53, 54) dieser Platinengruppe (51; 52) eine Länge (s) einer Sehne (141) zwischen der Scheitellinie (142) des Platinenwinkels (β) und der Kontaktstelle (143) des Schleifkontakts (61; 62) mit dem Kontaktring (121) definiert,
- **dass** der von der Sehne (141) und einer Radialebene zur Drehachse (11) an der Kontaktstelle (143) eingeschlossene Kontaktwinkel (γ) zweier Drehübertrager (10) sich um maximal +/- fünf Grad voneinander differiert,
- **dass** der von der Sehne (141) und der Platinenauflageflächen (77, 78) eingeschlossene Zusatzwinkel (η) beider Drehverteiler (10) gleich ist,
- **dass** der jeweilige Platinenwinkel (β) die Summe des doppelten Zusatzwinkels (η) und des Arcuscosinus des Produkts aus dem Kehrwert des Abstands (a) zwischen der Scheitellinie (142) und der Drehachse (11) und aus der Differenz der Sehnenlänge (s) und des mit dem Cosinus des Kontaktwinkels (γ) multiplizierten halben Kontaktringdurchmessers (D) des jeweiligen Drehübertragers (10) ist und
- **dass** der Abstand (a) zwischen der Scheitellinie (142) und der Drehachse (11) die positive Wurzel aus der Summe des Quadrats der Sehnenlänge (s), des Quadrats des jeweiligen halben Kontaktringdurchmessers (D) und des negativen Produkts der Sehnenlänge (s), des jeweiligen Kontaktringdurchmessers (D) und des Cosinus des Kontaktwinkels (γ) ist.

**Claims**

1. A rotary transmitter (10) for electrical signals, data and/or electrical energy, with a first portion (21; 81) having at least one sliding contact (61; 62), and with a second portion (81; 21), which is mounted rotatably about a rotation axis (11) relative to the first portion (21; 81) and has at least one contact ring (121) contacting the sliding contact (61; 62), at least two sliding contacts (61, 62) bearing against each contact ring (121), the rotary transmitter (10) having at least one circumferential media channel (44), and the contact rings (121) being situated radially outside the at least one media channel (44),
**characterised in that**

- the rotary transmitter (10) has two circuit boards (53, 54), to each of which one of said sliding contacts (61, 62) is assigned,

- said two circuit boards (53, 54), which form a circuit board group (51; 52), form a circuit board angle ($\beta$) between ($\pi/2$) and ($\pi$) with one another in a normal plane to the rotation axis (11),
- said circuit board group (51; 52) is arranged on a single circuit board carrier (70),
- the rotary transmitter (10) has at least two round sealing rings (18), which are arranged coaxially with the rotation axis (11), bear against both portions (21, 81) and delimit at least the circumferential media channel (44).

2. The rotary transmitter (10) according to Claim 1, **characterised in that** the two circuit boards (53, 54) of the circuit board group (51; 52) are connected to one another by means of a flexible connecting strip (55).

3. The rotary transmitter (10) according to Claim 2, **characterised in that** the flexible connecting strip (55) consists of a non-conductive carrier material of the circuit boards (53, 54), at least in some regions.

4. The rotary transmitter (10) according to Claim 1, **characterised in that** each circuit board (53, 54) comprises at least four conductors (57), which are arranged parallel to one another and each have a sliding contact (61; 62).

5. The rotary transmitter (10) according to Claim 1, **characterised in that** the angle bisector of the circuit board angle ($\beta$) intersects the rotation axis (11).

6. The rotary transmitter (10) according to Claim 1, **characterised in that** the contact rings (121) each have a linear contact, oriented parallel to the rotation axis (11), with the sliding contacts (61; 62) at two contact points (143).

7. The rotary transmitter (10) according to Claim 1, **characterised in that** the contact rings (121) are arranged in groups, wherein the number of contact rings (121) per group is half the number of sliding contacts (61, 62) per circuit board group (51; 52).

8. A series of at least two rotary transmitters (10) of different sizes according to Claim 1, **characterised in that**

- said rotary transmitters (10) differ in the diameter (D) of their contact rings (121),
- both rotary transmitters (10) have at least one identical circuit board group (51; 52),
- each circuit board (53, 54) of said circuit board group (51; 52) defines a length (s) of a chord (141) between the apex line (142) of the circuit board angle ($\beta$) and the contact point (143) between the sliding contact (61; 62) and the contact ring (121),
- the contact angles ($\gamma$) of two rotary transmitters (10), which angles are formed at the contact point (143) by the chord (141) and a radial plane to the rotation axis (11), differ from one another by a maximum of +/- five degrees,
- the additional angles ($\eta$) of both rotary distributors (10), which angles are formed by the chord (141) and the circuit board supporting faces (77, 78), are equal,
- the respective circuit board angle ($\beta$) is the sum of twice the additional angle ($\eta$) and the arc cosine of the product of the reciprocal of the distance (a) between the apex line (142) and the rotation axis (11) and of the difference between the chord length (s) and half the contact ring diameter (D) of the respective rotary transmitter (10) multiplied by the cosine of the contact angle ($\gamma$), and
- the distance (a) between the apex line (142) and the rotation axis (11) is the positive root of the sum of the square of the chord length (s), the square of half the respective contact ring diameter (D) and the negative product of the chord length (s), the respective contact ring diameter (D) and the cosine of the contact angle ($\gamma$).

**Revendications**

1. Transducteur de rotation (10) pour des signaux électriques, des données et/ou une énergie électrique, doté d'au moins une première zone partielle (21 ; 81) comportant un contact coulissant (61 ; 62) et doté d'une deuxième zone partielle (81 ; 21), logée en rotation par rapport à la première zone partielle (21 ; 81) autour d'un axe de rotation (11), d'au moins une bague de contact (121) contactant le contact coulissant (61 ; 62), à chaque bague de contact (121) étant adjacents au moins deux contacts coulissants (61, 62), le transducteur de rotation (10) comportant au moins un canal de media (44) périphérique et les bagues de contact (121) se situant en direction radiale à l'extérieur de l'au moins un canal de media (44),
**caractérisé**

- **en ce que** le transducteur de rotation (10) comporte deux circuits imprimés (53, 54) auxquels est associé chaque fois l'un desdits contacts coulissants (61, 62),
- **en ce que** lesdits deux circuits imprimés (53, 54) constituant un groupe de circuits imprimés (51 ; 52) incluent entre eux dans un plan normal par rapport à l'axe de rotation (11) un angle (β) de circuit imprimé compris entre (n/2) et (n),
- **en ce que** ledit groupe de circuits imprimés (51 ; 52) est placé sur un unique support (70) de circuits imprimés,
- **en ce que** le transducteur de rotation (10) comporte au moins deux joints toriques (18), placés de manière coaxiale par rapport à l'axe de rotation (11), adjacents aux deux zones partielles (21, 81) et délimitant au moins le canal de media (44) périphérique.

2. Transducteur de rotation (10) selon la revendication 1, **caractérisé en ce que** les deux circuits imprimés (53, 54) du groupe de circuits imprimés (51 ; 52) sont assemblés l'un à l'autre au moyen d'une bande d'assemblage (55) souple.

3. Transducteur de rotation (10) selon la revendication 2, **caractérisé en ce que** la bande d'assemblage (55) souple est constituée au moins par zones d'une matière porteuse non conductrice des circuits imprimés (53, 54).

4. Transducteur de rotation (10) selon la revendication 1, **caractérisé en ce que** chaque circuit imprimé (53, 54) comprend au moins quatre pistes conductrices (57), placées à la parallèle les unes des autres, comportant chacune un contact coulissant (61 ; 62).

5. Transducteur de rotation (10) selon la revendication 1, **caractérisé en ce que** la bissectrice de l'angle (β) de circuit imprimé recoupe l'axe de rotation (11).

6. Transducteur de rotation (10) selon la revendication 1, **caractérisé en ce que** les bagues de contact (121) détiennent avec les contacts coulissants (61 ; 62) chaque fois sur deux points de contact (143) un contact linéaire orienté à la parallèle de l'axe de rotation (11).

7. Transducteur de rotation (10) selon la revendication 1, **caractérisé en ce que** les bagues de contact (121) sont placées en groupes, le nombre des bagues de contact (121) par groupe s'élevant à la moitié du nombre des contacts coulissants (61, 62) par groupe de circuits imprimés (51 ; 52).

8. Gamme constituées d'au moins deux transducteurs de rotation (10) de dimensions différentes selon la revendication 1, **caractérisée**

   - **en ce que** lesdits transducteurs de rotation (10) se différencient par le diamètre (D) de leurs bagues de contact (121),
   - **en ce que** les deux transducteurs de rotation (10) comportent au moins un groupe identique de circuits imprimés (51 ; 52),
   - **en ce que** chaque circuit imprimé (53, 54) dudit groupe de circuits imprimés (51 ; 52) définit une longueur (s) d'un tendon (141) entre la ligne de sommet (142) de l'angle (β) de circuit imprimé et le point de contact (143) du contact coulissant (61 ; 62) avec la bague de contact (121),
   - **en ce que** l'angle de contact (γ) de deux transducteurs de rotation (10) inclus au point de contact (143) par le tendon (141) et un plan radial par rapport à l'axe de rotation (11) se différencie l'un de l'autre d'un maximum de +/cinq degrés,
   - **en ce que** l'angle supplémentaire (η) des deux distributeurs de rotation (10) inclus entre le tendon (141) et les surfaces d'appui (77, 78) des circuits imprimés est identique,
   - **en ce que** l'angle (β) de circuit imprimé respectif est la somme du double de l'angle supplémentaire (η) et de l'arc cosinus du produit de la réciproque de l'écart (a) entre la ligne de sommet (142) et l'axe de rotation (11) et de la différence de la longueur (s) du tendon et du demi-diamètre (D) de la bague de contact, multiplié par le cosinus de l'angle de contact (γ) du transducteur de rotation (10) concerné et
   - **en ce que** l'écart (a) entre la ligne de sommet (142) et l'axe de rotation (11) est la racine positive de la somme du carré de la longueur (s) du tendon, du carré du demi-diamètre (D) respectif de la bague de contact et du produit négatif de la longueur (s) du tendon, du diamètre (D) respectif de la bague de contact et du cosinus de l'angle de contact (γ).

10   15   21   31   101   81   91   115   11

12   41   86   25   24   22   23   87   82   83

**Fig. 1**

86 88 12 13 94 34 31 10 111 33 32 121 122 21 93 81

87 16 18 35 25 24 51 22 15 23 52 17 26 96 91 92 11

# Fig. 2

**Fig. 3**

**Fig. 4**

**Fig. 5**

**Fig. 6**

**Fig. 7**

**Fig. 8**

Fig. 9

Fig. 10

**Fig. 11**

Fig. 12

Fig. 13

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2138281 A1
- DE 102008055971 A1
- US 2248394 A
- EP 3154134 A1
- DE 102011006322 A1
- DE 10006226 A1